# EUROPÄISCHE PATENTSCHRIFT

(11) **EP 1 612 907 B1**
(45) Veröffentlichungstag und Bekanntmachung des Hinweises auf die Patenterteilung: **04.06.2014**
(21) Anmeldenummer: 05105944.2
(22) Anmeldetag: 30.06.2005
(51) Int. Cl.: H02J 7/00, H02H 7/18, H01M 10/052, H01M 10/44, H02H 5/04, H01M 10/48

(54) **Akkupack für Elektrohandwerkzeugmaschine**
Battery pack for electric hand guided power tool
bloc-batterie pour machine-outil manuelle électrique

(30) Priorität: 30.06.2004 DE 102004031601
(43) Veröffentlichungstag der Anmeldung: 04.01.2006
(73) Patentinhaber: HILTI Aktiengesellschaft, 9494 Schaan (LI)
(72) Erfinder: Ziegler, Bernd, 86856, Hiltenfingen (DE); Heigl, Bernd, 86199, Augsburg (DE); Krebs, Stephan, 86899, Landsberg (DE)
(74) Vertreter: Wildi, Roland

(56) Entgegenhaltungen:
- EP-A1- 0 448 767
- US-A- 5 518 832
- US-B1- 6 331 763

## Beschreibung

Die Erfindung bezeichnet ein für Elektrohandwerkzeugmaschinen ausgebildeten Akkupack.

Insbesondere Akkupacks für Elektrohandwerkzeugmaschinen mit hohem Leistungsbedarf, wie Bohrhämmer und Handkreissägen, müssen in kurzer Zeit nachgeladen werden können, um im Wechsel mit einem weiteren Akkupack eine quasikontinuierliche Nutzung der Elektrohandwerkzeugmaschine zu ermöglichen. Um dennoch eine hinreichende Lebensdauer der Akkupacks zu erzielen, müssen akkuspezifische Grenzwerte, insbesondere die Temperatur, beim Laden und Entladen berücksichtigt werden. Dazu wird üblicherweise die Temperatur des Akkupacks über einen im Akkupack angeordneten, als temperaturabhängigen Widerstand mit negativem Temperaturkoeffizienten ausgebildeten, standardisierten analogen Temperatursensor überwacht und von einer Akkuschutzelektronik bei Überschreitung eines Grenzwertes der Stromfluss mit einem im Strompfad angeordneten Leistungsschalter wie einem Leistungs-MOSFET unterbrochen.

Am Markt weit verbreitet und über standardisierte Schnittstellen zum Verbraucher bzw. Ladegerät herstellerübergreifend austauschbar sind NiCd- und NiMH-Akkupacks für Elektrohandwerkzeugmaschinen, die einen im Akkupack angeordneten, als temperaturabhängigen Widerstand mit negativem Temperaturkoeffizienten ausgebildeten, standardisierten analogen Temperatursensor aufweisen. Die angestrebte Schutzfunktion des Akkus wird jedoch nur bei sachgerechter Benutzung und Einstellung der Akkuschutzelektronik des Verbrauchers bzw. Ladegerätes erzielt. Probleme ergeben sich dabei insbesondere durch die geometrisch baugleichen, jedoch bezüglich der Grenzwerte unterschiedlich zu benutzenden Akkumulatorzellen, wie bspw. NiCd-Zellen, NiMH-Zellen oder die besonders empfindlichen Li-lonen-Zellen.

Ferner bekannt ist die Anordnung der gesamten Akkuschutzelektronik im Akkupack. Die bei Akkupacks für Elektrohandwerkzeugmaschinen notwendig hohen Ströme erzeugen über den Innenwiderstand des Leistungsschalters erhebliche Wärmemengen, welche die Temperatur erhöhen. Eine übliche Verminderung des Innenwiderstandes des Leistungsschalters durch Verwendung spezieller niederohmiger Leistungs-MOSFETs oder einer Parallelschaltung mehrerer Leistungs-MOSFETs ist insbesondere im Hinblick auf die hohen Stückzahlen von Akkupacks unökonomisch, da je Elektrohandwerkzeugmaschine in deren Nutzungsdauer eine Vielzahl von Akkupacks benutzt werden.

Nach der NL9201744 weist eine von einem Akkupack gespeiste Elektrohandwerkzeugmaschine eine Akkuschutzelektronik auf, wobei ein analoger Temperatursensor im Akku und eine Akkuschutzlogik sowie ein Leistungsschalter in der Elektrohandwerkzeugmaschine angeordnet ist, welche zugleich zur Motorsteuerung und als Ladegerät nutzbar ist. Zur Messung der Akkutemperatur weist der Akku eine von Aussen zugängliche Temperaturmessschnittstelle zu der Akkuschutzlogik auf.

Nach der EP0448767 bildet ein Akkupack für diverse Verbraucher und ein mit diesem verbundenes Ladegerät eine modular aufgeteilte Akkuschutzelektronik aus, wobei im Akkupack ein Temperatursensor und die Akkuschutzlogik angeordnet ist, welche über digitale serielle Steuerimpulse einer elektronischen Steuerschnittstelle einen im Ladegerät angeordneten Leistungsschalter steuert. Die digitale Steuerung ist nur mit dem Akku spezifisch zugeordneten Ladegeräten oder Verbrauchern dekodierbar und somit funktionsfähig.

US5518832 offenbart ein Akkupack, umfassend einen analogen Temperatursensor mit negativem Temperaturkoeffizienten. Die Temperaturschnittstelle ist von Aussen zugänglich.Eine Notfallschutzschaltung ist auch vorhanden, die topologisch parallel zum Temperatursensor geschaltet ist.

Die Aufgabe der Erfindung besteht in der Realisierung eines ökonomisch herstellbaren Akkupacks, welcher in Verbindung mit einer standardisiert zugeordneten Elektrohandwerkzeugmaschine bzw. einem standardisiert zugeordneten Ladegerät eine Akkuschutzelektronik erhöhter Sicherheit ausbildet.

Die Aufgabe wird im Wesentlichen durch die Merkmale des Anspruchs 1 gelöst. Vorteilhafte Weiterbildungen ergeben sich aus den Unteransprüchen.

So weist ein für eine zugeordnete Elektrohandwerkzeugmaschine als Verbraucher bzw. für ein zugeordnetes Ladegerät ausgebildeter Akkupack einen analogen Temperatursensor mit negativen Temperaturkoeffizienten und mit einer von Aussen zugänglichen Temperaturmessschnittstelle auf, über welche eine in der Elektrohandwerkzeugmaschine bzw. im Ladegerät angeordnete Akkuschutzelektronik mit einer Akkuschutzlogik und einem im Strompfad des Akkupacks angeordneten Leistungsschalter beeinflussbar ist, wobei im Akkupack eine Notfallschutzschaltung vorhanden ist, die topologisch parallel zum analogen Temperatursensor geschaltet ist und über welche im Notfallereignis der über die Temperaturmessschnittstelle von Aussen messbare Gesamtwiderstand aktiv verminderbar ist.

Durch den im Notfallereignis von der Notfallschutzschaltung aktiv verminderten und von der Akkuschutzelektronik des standardisiert zugeordneten Verbrauchers bzw. des standardisiert zugeordneten Ladegerätes über die Temperaturmessschnittstelle messbaren Gesamtwiderstand ist von der Notfallschutzschaltung die Akkuschutzelektronik des Verbrauchers bzw. des Ladegerätes beeinflussbar, indem über den verminderten Gesamtwiderstand eine Temperaturerhöhung simuliert wird. Somit ist eine von den Grenzwerten des zugeordneten Verbrauchers bzw. des standardisiert zugeordneten Ladegerätes unabhängige, zweite Sicherheitsstufe realisiert. Eine relevante Wärmeentwicklung innerhalb des Akkupacks entsteht durch diese Notfallschutzschaltung nicht.

Vorteilhaft ist die gesamte Notfallschutzschaltung als Integrierte Schaltung, bspw. als Mikrocontroller ausgebildet, wodurch diese ökonomisch in hohen Stückzahlen einsetzbar ist.

Vorteilhaft weist der Akkupack intern Li-lonen-Zellen auf, wodurch bei diesen hochenergetischen, aber bezüglich Temperaturgrenzwerten sensiblen Akkumulatorzellen ansonsten mögliche Schädigungen bei unsachgemässer Verwendung zuverlässiger vermieden werden.

Die Erfindung wird bezüglich eines vorteilhaften Ausführungsbeispiels näher erläutert mit:
Fig. 1 als Akkupack mit zugeordneter Elektrohandwerkzeugmaschine
Fig. 2 als Akkupack mit zugeordnetem Ladegerät

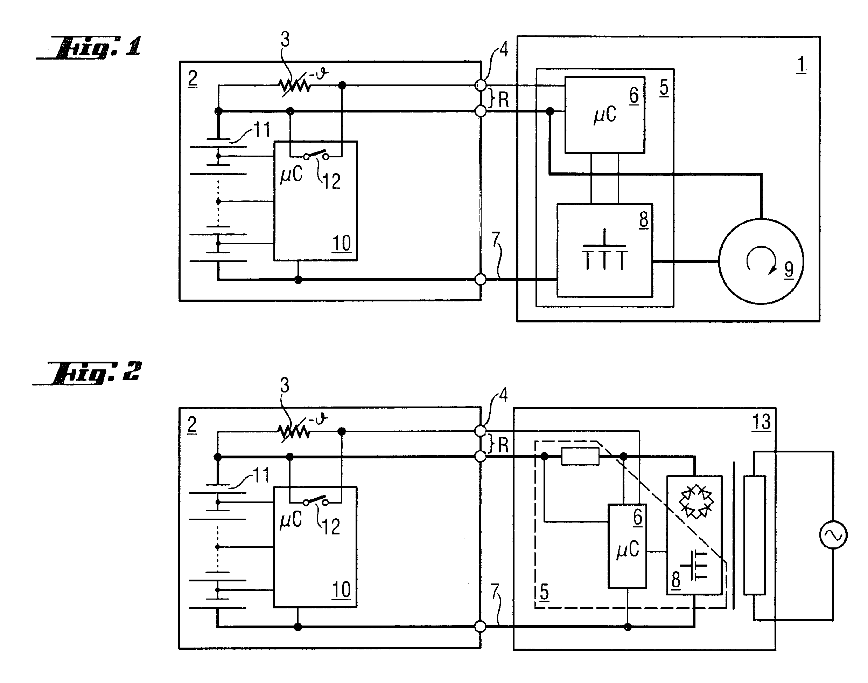

Nach Fig. 1 weist ein mit einer zugeordneten Elektrohandwerkzeugmaschine 1 als Verbraucher elektrisch verbundener Akkupack 2 einen analogen Temperatursensor 3 mit negativem Temperaturkoeffizienten auf. Mittels einer von Aussen zugänglichen Temperaturmessschnittstelle 4 ist eine in der Elektrohandwerkzeugmaschine 1 angeordnete Akkuschutzelektronik 5 mit einer als Mikrocontroller ausgebildeten Akkuschutzlogik 6 und einem im Strompfad 7 des Akkupacks 2 angeordneten als Leistungs-MOSFET ausgebildeten Leistungsschalter 8 beeinflussbar, der zudem steuerbar mit einem die Elektrohandwerkzeugmaschine 1 antreibenden Elektromotor 9 verbunden ist. Im Akkupack 2 ist eine als Mikrocontroller ausgebildete Notfallschutzschaltung 10 vorhanden, die topologisch parallel zum analogen Temperatursensor 3 geschaltet und mit mehreren als Li-Ionen-Zellen ausgeführten Akkumulatorzellen 11 messbar verbunden ist, wobei hier die Spannung jeder einzelnen Akkumulatorzelle 11 erfasst wird. Von Aussen über die Temperaturmessschnittstelle 4 ist der sich durch die Parallelschaltung des analogen Temperatursensors 3 und der Notfallschutzschaltung 10 mit einem Kurzschlussschalter 12 parallel zum analogen Temperatursensor 3 ergebende Gesamtwiderstand R messbar, der im Notfallereignis zu Null wird und dadurch eine unendlich hohe Temperatur simuliert, die von der Akkuschutzelektronik 5 registriert wird und durch Öffnen des Leistungsschalters 8 zum sicheren Unterbrechen des Strompfads 7 führt.

Nach Fig. 2 ist der Akkupack 2 mit dem analogen Temperatursensor 3 mit negativem Temperaturkoeffizienten mit einem zugeordneten, netzgespeisten Ladegerät 13 elektrisch verbunden. Mittels der von Aussen zugänglichen Temperaturmessschnittstelle 4 ist die im Ladegerät 13 angeordnete Akkuschutzelektronik 5 mit der Akkuschutzlogik 6 und dem im Strompfad 7 des Akkupacks 2 angeordneten Leistungsschalter 8 beeinflussbar. Von Aussen über die Temperaturmessschnittstelle 4 ist der sich durch die Parallelschaltung des analogen Temperatursensors 3 und der Notfallschutzschaltung 10 mit einem Kurzschlussschalter 12 parallel zum analogen Temperatursensor 3 ergebende Gesamtwiderstand R messbar, der im Notfallereignis zu Null wird und dadurch eine unendlich hohe Temperatur simuliert, die von der Akkuschutzelektronik 5 registriert wird und durch Öffnen des Leistungsschalters 8 zum sicheren Unterbrechen des Strompfads 7 führt.

## Patentansprüche

1. Akkupack für eine zugeordnete Elektrohandwerkzeugmaschine (1) als Verbraucher bzw. für ein zugeordnetes Ladegerät (13) mit einem analogen Temperatursensor (3) mit negativem Temperaturkoeffizienten und einer von Aussen zugänglichen Temperaturmessschnittstelle (4), über welche eine in der Elektrohandwerkzeugmaschine (1) bzw. im Ladegerät (13) angeordnete Akkuschutzelektronik (5) mit einer Akkuschutzlogik (6) und einem im Strompfad (7) des Akkupacks angeordneten Leistungsschalter (8) beeinflussbar ist, wobei im Akkupack eine Notfallschutzschaltung (10) vorhanden ist, die topologisch parallel zum analogen Temperatursensor (3) geschaltet ist und über welche in einem Notfallereignis der über die Temperaturmessschnittstelle (4) von Aussen messbare Gesamtwiderstand (R) aktiv verminderbar ist.

2. Akkupack nach Anspruch 1, **dadurch gekennzeichnet, dass** die gesamte Notfallschutzschaltung (10) als Integrierte Schaltung ausgebildet ist.

3. Akkupack nach Anspruch 1 oder 2, **dadurch gekennzeichnet, dass** intern als Li-lonen-Zellen ausgebildete Akkumulatorzellen (11) vorhanden sind.

## Claims

1. Battery pack for an associated electric hand guided power tool (1) as the consumer and for an associated charging device (13) having an analogue temperature sensor (3) with a negative temperature coefficient and a temperature measuring interface (4) which is accessible from outside and via which battery protection electronics (5) having battery protection logic (6) and arranged in the electric hand guided power tool (1) and in the charging device (13) and a power switch (8) in the battery pack current path can be influenced, wherein an emergency protection circuit (10) is provided in the battery pack and is connected in parallel with the analogue temperature sensor (3) and via which, in an emergency situation, the total resistance (R) measured from outside via the temperature measuring interface (4) can be actively reduced.

2. Battery pack according to claim 1, **characterised in that** the entire emergency protection circuit (10) is configured as an integrated circuit.

3. Battery pack according to claim 1 or 2, **characterised in that** battery cells (11) are provided which are internally configured as Li-ion cells.

## Revendications

1. Bloc-batterie destiné à un outillage électroportatif associé (1) servant de consommateur ou destiné à un appareil chargeur associé (13), doté d'un capteur de température analogique (3) ayant un coefficient de température négatif et d'une interface de mesure de température accessible de l'extérieur (4), par le biais desquels peut être influencée une unité électronique de protection des batteries (5), disposée dans l'outillage électroportatif (1) ou dans l'appareil chargeur (13) et ayant une unité logique de protection des batteries (6) et un commutateur de puissance (8) disposé dans le chemin de courant (7) du bloc-batterie, le bloc-batterie comprenant un circuit de protection d'urgence (10) monté en parallèle avec le capteur de température analogique (3) et par le biais duquel, dans un cas d'urgence, la résistance globale (R), mesurable depuis l'extérieur par l'interface de mesure de température (4), peut être réduite de manière active.

2. Bloc-batterie selon la revendication 1, **caractérisé en ce que** tout le circuit de protection d'urgence (10) est conçu en tant que circuit intégré.

3. Bloc-batterie selon la revendication 1 ou 2, **caractérisé en ce que** des cellules de batterie (11) conçues en tant que cellules Li-ion sont présentes en interne.
